# EUROPEAN PATENT SPECIFICATION

(11) **EP 2 581 434 B1**
(45) Date of publication and mention of the grant of the patent: **03.06.2015**
(21) Application number: 10853065.0
(22) Date of filing: 13.06.2010
(51) Int. Cl.: C09K 11/58, C09K 11/59, C09K 11/87

(54) **SILICATE LUMINOUS MATERIALS AND PREPARATION METHODS THEREOF**
SILIKATLEUCHTSTOFFE UND VERFAHREN ZU IHRER HERSTELLUNG
MATÉRIAUX LUMINEUX À BASE DE SILICATE ET LEURS PROCÉDÉS DE PRÉPARATION

(43) Date of publication of application: 17.04.2013
(73) Proprietor: Ocean's King Lighting Science&Technology Co., Ltd., Guangdong 518054 (CN)
(72) Inventor: ZHOU, Mingjie, Shenzhen, Guangdong 518054 (CN); MA, Wenbo, Shenzhen, Guangdong 518054 (CN); WANG, Rong, Shenzhen, Guangdong 518054 (CN)
(74) Representative: Michalski Hüttermann & Partner Patentanwälte mbB
(86) International application number: PCT/CN2010/073986
(87) International publication number: WO 2011/156955

(56) References cited:
- CN-A- 101 074 374
- US-A1- 2009 281 265
- MIN Y L ET AL: "Au@Y2O3:Eu<3+> rare earth oxide hollow sub-microspheres with encapsulated gold nanoparticles and their optical properties", SOLID STATE SCIENCES, ELSEVIER, PARIS, FR, vol. 11, no. 1, 1 January 2009 (2009-01-01), pages 96-101, XP025840977, ISSN: 1293-2558, DOI: 10.1016/J.SOLIDSTATESCIENCES.2008.04.021 [retrieved on 2008-05-01]
- CHO, TAE HWAN ET AL.: 'Preparation and Characterizations of Zn2Si04:Mn Green Phosphors' CERAMICS INTERNATIONAL vol. 26, no. 6, 31 December 2003, pages 611 - 618

## Description

### FIELD OF THE INVENTION

The present invention relates to the fields of luminescent materials and lighting technology, more particularly, relates to a silicate luminous material and a preparation method thereof.

### BACKGROUND OF THE INVENTION

The luminescent properties of a silicate luminous material is relates to its morphology and particle size. Spherical and spherical-like luminous materials, as well as luminous materials with Particle uniformity between 3.0 to 5.0µm always have high illumination intensity, and easy to apply. However, traditional luminous materials are manufactured by high temperature solid state method, the granularity is uneven, and needing many times of ball mill to gain appropriate particle size, the defects of ball mill process and the impurity produced damaged the illumination intensity, and thus disadvantage in application.

### SUMMARY OF THE INVENTION

Based on this, it is necessary to provide a uniform size distribution, high illumination intensity of silicate luminous materials.

A silicate luminous material which is represented by the following chemical formula: Zn₂₋ₓSiO₄:Mnₓ@SiO₂@M_{y}, in which @ is coating, M is inner core, SiO₂ is middle shell, Zn₂₋ₓSiO₄:Mnₓ is outer shell; M is a metal selected at least one from the group consisting of Ag, Au, Pt, Pd and Cu; y is molar ratio of M to Si in the silicate luminous material; and, the scope of x is: 0<x≤0.2, the scope of y is 0<y≤1×10⁻².

Preferably, the scope of x is 0.02≤x≤0.10, the scope of y is 1×10⁻⁵≤y≤5×10⁻³.

In addition, due to the defects in traditional high temperature solid state method, it is necessary to provide a preparation method to get spherical silicate luminous materials.

A preparation method of silicate luminous material, includes the steps of: A) mixing a salt solution containing M, an addition agent solution for stabilizing and dispersing, and a reducing agent solution, reacting to obtain a collosol containing M nano-particle; and M is a metal selected at least one from the group consisting of Ag, Au, Pt, Pd and Cu; B) adding the collosol containing M nano-particle into PVP (i.e., polyvinylpyrrolidone) aqueous solution for M nano-particle surface treating, then coating SiO₂ nanosphere by StÖber method, to obtain a SiO₂@M sol suspension; C) introducing a Zn salt solution and a Mn salt solution into the SiO₂@M sol suspension, the amount of Zn and Mn element is according to stoichiometric ratio of chemical formula Zn₂₋ₓSiO₄:Mnₓ@SiO₂@M_{y}, and the scope of x is 0.02≤x≤0.10, the scope of y is 1×10⁻⁵≤y≤5x10⁻³; and, adding a precipitating agent into the suspension, then filtering, washing and drying the generated precipitate, to obtain a precursor; and, drying the precursor for 2 to 10 hours, and heat treatment in reducing atmosphere, then cooling to obtain the silicate luminous material Zn₂₋ₓSiO₄:Mnₓ@SiO₂@M_{y}; wherein @ is coating, M is inner core, SiO₂ is middle shell, Zn₂₋ₓSiO₄:Mnₓ is outer shell.

Preferably, the step A further including the step of preparing the salt solution containing M, which is,
providing raw material of M-salt, adding into deionized water or ethanol, then stirring to obtain the salt solution containing M with concentration from 1×10⁻³mol/L to 5×10⁻³mol/L; the raw material of M-salt is selected at least one from the group consisting of AgNO₃, AuCl₃·HCl·4H₂O, H₂PtCl₆·6H₂O, PdCl₂·2H₂O, and Cu(NO₃)₂.

Preferably, in step A, the addition agent is selected at least one from the group consisting of PVP, sodium citrate, cetyltrimethyl ammonium bromide, sodium dodecyl sulfate, and sodium dodecyl sulfonate; and the content of addition agent in the collosol containing M nano-particle is from 1×10⁻⁴g/ml to 5×10⁻²g/ml; and the concentration of the reducing agent solution is from 1×10⁻⁴moL/L to 1.0mol/L, the reducing agent is selected at least one from the group consisting of hydrazine hydrate, ascorbic acid, sodium citrate, and sodium borohydride; and the molar ratio of reducing agent to M is from 3.6:1 to 18:1.

Preferably, in step B, the concentration of the PVP aqueous solution is from 0.005 g/ml to 0.1g/ml.

Further in step B, the processing of coating SiO₂ nanosphere by StÖber method includs: adding absolute ethanol, deionized water, aqueous ammonia, and TEOS (i.e., tetraethyl orthosilicate) one after another into the collosol containing M nano-particle, stirring to obtain the SiO₂@M sol suspension.

Preferably, in step C, prior to introducing a Zn salt solution and a Mn salt solution into the SiO₂@M sol suspension, pH value of the SiO₂@M sol suspension.is adjusted to 3.0 to 3.5.

Preferably, in step C, the Zn salt solution is selected from the group of Zn solution consisting of nitrate, acetate, sulfate, and hydrochloride; the Mn salt is selected from the group of Mn solution consisting of nitrate, acetate, sulfate, and hydrochloride; the stoichiometric ratio of Zn and Mn to Si is ( Zn+Mn ) : Si ≤1 : 2; the precipitating agent is ammonium oxalate, the amount of ammonium oxalate is 125% to the total moles of Zn₂₋ₓSiO₄:Mnₓ@SiO₂@M_{y} suspension.

Preferably, in step S3, the heat treatment is under temperature around 1000°C to 1300°C, and treating for 1 to 6 hours.

Preferably, the reducing atmosphere is selected from the group consisting of N₂ and H₂ mixed reduction atmosphere, CO reduction atmosphere, and H₂ reduction atmosphere.

The above-mentioned silicate luminescent material, by coating metal particle to form a core-shell structure, improves inner quantum efficiency of the silicate, and by adding metal nano-particles, strengthens luminous intensity of the silicate; furthermore, the luminescent material has good stability, has spherical morphology, and the size and morphology can be controlled; as spherical morphology has higher bulk density, it is facilitate in coating and improves the display effect.

At the same time, by using the aforesaid precipitation method, it can get epigranular, core-shell structured, spherical morphology of luminescent material; and by this method, it reduces reaction temperature, simplifies preparation technology, decreases equipment requirements, and no pollution, easy to control.

### BRIEF DESCRIPTION OF THE DRAWINGS

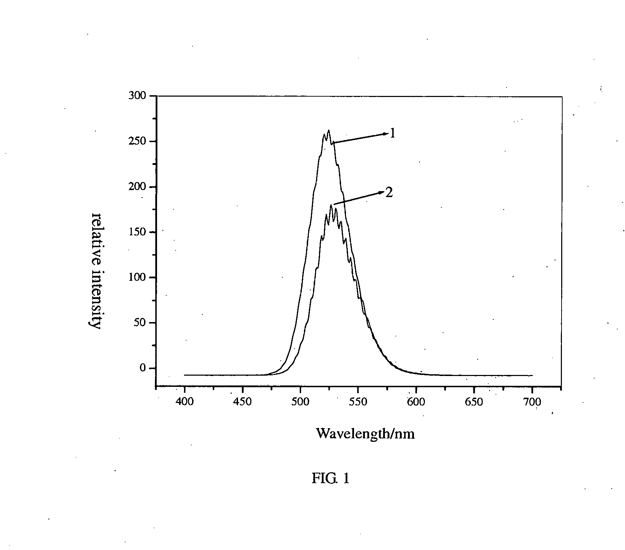

Fig. 1 shows the comparison CL emission spectrum of the luminescent materials at the condition of the accelerate voltage is 1.5kv, according to example 3; curve 1 is the spectrum of luminescent material Zn_{1.96}SiO₄:Mn_{0.04}@Ag_{2.5×10}⁻⁴, and curve 2 is the spectrum of commercial obtained luminescent material Zn₂SiO₄:Mn.

### DETAILED DESCRIPTION

A silicate luminescent material, by coating metal nano-particle to form a core-shell structure, improves inner quantum efficiency of the luminescent material, and with high luminous intensity and good stability.

The silicate luminescent material can be used as green fluorescent powder in field emission devices, the structure is represented by the following chemical formula: Zn₂₋ₓSiO₄:Mnₓ@SiO₂@M_{y}, in which @ is coating, M is inner core, SiO₂ is middle shell, Zn₂₋ₓSiO₄:Mnₓ is outer shell; M is a metal selected at least one from the group consisting of Ag, Au, Pt, Pd and Cu; y is molar ratio of M to Si in the silicate luminous material; and, the scope of x is: 0<x≤0.2, the scope of y is 0<y≤1×10⁻².

This invention further provided a preparation method of silicate luminous material, comprising the steps of:

Firstly, mixing a salt solution containing M, an addition agent solution for stabilizing and dispersing, and a reducing agent solution, reaction to obtain a collosol containing M nano-particle; in details as following:

(1). preparing salt solution containing M with concentration from 1x10⁻³mol/L to 5×10⁻³mol/L, the salt solution containing M is selected at least one from AgNO₃, AuCl₃·HCl·4H₂O, H₂PtCl₆·6H₂O, PdCl₂·2H₂O, or Cu(NO₃)₂, the solvent is deionized water or ethanol, and M is selected at least one from Ag, Au, Pt, Pd, or Cu.

(2). with magnetic stirring, dissolving at least one addition agent into the prepared salt solution containing M, the content of addition agent in the collosol containing M nano-particle is from 1×10⁻⁴g/ml to 5×10⁻²g/ml; the addition agent is selected at least one from PVP, sodium citrate, cetyltrimethyl ammonium bromide, sodium dodecyl sulfate, or sodium dodecyl sulfonate;

(3). preparing a reducing agent with concentration from 1×10⁻⁴mol/L to 1.0mol/L, the reducing agent is selected at least one from hydrazine hydrate, ascorbic acid, sodium citrate, or sodium borohydride, and the solvent is deionized water or ethanol;

(4). with magnetic stirring, adding the M-salt solution prepared in step (2) into the reducing agent solution prepared in step (3), according to the molar ratio of reducing agent to M is from 3.6:1 to 18:1; the reaction for 10min to 45min to obtain collosol containing M nano-particle.

Next, adding the collosol containing M nano-particle into PVP aqueous solution, for M nano-particle surface treating, then coating SiO₂ nanosphere by StÖber method, to obtain a SiO₂@M sol suspension; in details as following:

(1). adding PVP into the collosol containing M nano-particle, according to the volume of the collosol, stirring for 3 hours to 24 hours in room temperature, to obtain the collosol with concentration of PVP from 0.005g/ml to 0.1g/ml;

(2). adding TEOS into a mixture to arise condensation - condensation reaction, the mixture containing deionized water, surface treated collosol containing M nano-particl, absolute ethanol, and aqueous ammonia; after 3 hours to 12 hours reaction, a milk-white SiO₂@M sol suspension is obtained.

Finally, introducing a Zn salt solution and a Mn salt solution into the SiO₂@M sol suspension, the amount of Zn and Mn element is according to stoichiometric ratio of chemical formula Zn₂₋ₓSiO₄:Mnₓ; adding a precipitating agent into the suspension, washing and drying the generated precipitate to obtain a precursor; heat treating and reduce treating the precursor, then cooling, to obtain the silicate luminous material Zn₂₋ₓSiO₄:Mnₓ@SiO₂@M_{y}; in details as following:
(1). adjusting pH value between 3.0 to 3.5 of the SiO₂@M sol suspension, then adding into salt solution containing Zn and Mn, preferred salt solution is nitrate solution, acetate solution, sulfate solution, and/or hydrochloride solution; the stoichiometric ratio of Zn and Mn to Si is (Zn+Mn) : Si ≤ 1 : 2.
(2). adding ammonium oxalate to act as precipitating agent, once white precipitate generated, stirring, ageing and filtering it, then washing the precipitate by deionized water and absolute alcohol for two to three times, drying and obtain the premonitory; in prefer, the amount of ammonium oxalate is 125% to the total moles of Zn₂₋ₓSiO₄:Mnₓ@SiO₂@M_{y} suspension, thus to ensure thoroughly precipitate.
(3). putting the premonitory into the muffle for heat treatment 2 to 10 hours under temperature of 1000°C to 1300°C.
(4). then transferring the premonitory into a reducing atmosphere for reducing 1 to 6 hours under temperature of 1000°C to 1300°C, the reducing atmosphere reducing atmosphere is selected from N₂ and H₂ mixed reduction atmosphere, CO reduction atmosphere, or H₂ reduction atmosphere.

Then, the present invention is combination with specific examples to illustrate the silicate luminescent material of different composition, and its preparation method, and the test of performance and other aspects.

### Example 1, Preparation of Zn_{1.92}SiO₄: Mn_{0.08}@SiO₂@ Au_{1×10}⁻² by Precipitation Coating Method

Preparation of Au nano-particle sol: Weigh accurately about 20.6mg AuCl₃·HCl-4H₂O and dissolve into 16.8ml deionized water; after the chloroauric acid dissolved thoroughly, weigh accurately about 14.0mg sodium citrate, 6.0mg CTAB (i.e., cetyl trimethyl ammonium bromide), and dissolve into the chloroauric acid aqueous solution by magnetic stirring; weigh accurately about 1.9mg sodium borohydride, 17.6mg ascorbic acid and dissolve into 10.0ml deionized water separately, get a sodium borohydride solution with concentration of 5x10⁻³mol/L, and a ascorbic acid solution with concentration of 1×10⁻²mol/L; with magnetic stirring, introducing 0.08ml sodium borohydride solution into the chloroauric acid aqueous solution, stirring and reaction for 5 minutes, then introducing 3.12ml ascorbic acid solution and reaction for 30 minutes, and get 20.0ml Au nano-particle sol with concentration of 5×10³mol/L; measuring and taking 10.0ml Au nano-particle sol with concentration of 5×10⁻³mol/L into a beaker, adding 2.0ml PVP solution with concentration of 0.1g/ml, magnetic stirring for 8 hours, finally get Au nano-particle after surface treatment.

Preparation of Zn_{1.92}SiO₄: Mn_{0.08}@SiO₂@ Au_{1×10}⁻² : By stirring, adding 25.0ml absolute ethanol, 5.0ml aqueous ammonia, and 1.2ml TEOS one after another into the Au nano-particle sol, and reaction for 8 hours, then adjusting the pH value of the solution with 3.0 to 3.5; introducing 4.8ml Zn(NO₃)₂ with concentration of 2.0mol/L, 4.0ml Mn (NO₃)₂ with concentration of 0.1mol/L, stirring, dropping 12.0ml ammonium oxalate solution with concentration of 1.0mol/L and generated white precipitate; then stirring for 1.5 hours, ageing, filtering, and washing the precipitate by deionized water and absolute alcohol for three times, drying and obtain a premonitory; putting the premonitory into the muffle for heat treatment 4 hours under temperature of 1300°C, then transfer into a tube furnace roasting for 2 hours under temperature of 1100°C in 95%N₂+5%H₂ mixed reducing atmosphere; cooling to room temperature, finally obtain the luminescent material Zn_{1.92}SiO₄: Mn_{0.08}@SiO₂@ Au_{1×10}-₂.

### Example 2, Preparation of Zn_{1.98}SiO₄: Mn_{0.02}@SiO₂@ Pt_{5×10}⁻³ by Precipitation Coating Method

Preparation of Pt nano-particle sol: Weigh accurately about 25.9mg H₂PtCl₆·6H₂O and dissolve into 17.0ml deionized water; after the chloroplatinic acid dissolved thoroughly, weigh accurately about 40.0mg sodium citrate, 60.0mg sodium dodecylsulphate, and dissolve into the chloroplatinic acid aqueous solution by magnetic stirring; weigh accurately about 1.9mg sodium borohydride to dissolve into 10.0ml deionized water, get 10.0ml sodium borohydride solution with concentration of 5×10⁻³mol/L; and preparing 10.0ml hydrazine hydrate solution with concentration of 5×10⁻²mol/L; with magnetic stirring, introducing 0.4ml sodium borohydride solution into the chloroplatinic acid aqueous solution, stirring and reaction for 5 minutes, then introducing 2.6ml hydrazine hydrate solution and reaction for 40 minutes, and get 10.0ml Pt nano-particle sol with concentration of 2.5×10⁻³mol/L; measuring and taking 8.0ml Pt nano-particle sol with concentration of 2.5×10⁻³mol/L into a beaker, adding 4.0ml PVP solution with concentration of 0.02g/ml, magnetic stirring for 18 hours, finally get Pt nano-particle after surface treatment.

Preparation of Zn_{1.98}SiO₄: Mn_{0.02}@SiO₂@ Pt_{5×10}⁻³: By stirring, adding 20.0ml absolute ethanol, 4.0ml aqueous ammonia, and 1.0ml TEOS one after another into the Pt nano-particle sol, and reaction for 3 hours, then adjusting the pH value of the solution with 3.0 to 3.5; introducing 7.92ml ZnCl₂ with concentration of 1.0mol/L, 4.0ml MnCl₂ with concentration of 0.02mol/L, stirring, dropping 25.0ml ammonium oxalate solution with concentration of 0.5mol/L and generated white precipitate; then stirring for 2 hours, ageing, filtering, and washing the precipitate by deionized water and absolute alcohol for three times, drying and obtain a premonitory; putting the premonitory into the muffle for heat treatment 10 hours under temperature of 1000°C, then roasting and reducing for 6 hours under temperature of 1000°C in CO reducing atmosphere; cooling to room temperature, finally obtain the luminescent material Zn_{1.98}SiO₄: Mn_{0.02}@SiO₂@

Pt_{5×10}⁻³.

### Example 3, Preparation of Zn_{1.96}SiO₄: Mn_{0.04}@SiO₂@ Ag_{2.5×10}⁻⁴ by Precipitation Coating Method

Preparation of Ag nano-particle sol: Weigh accurately about 3.4mg AgNO₃ and dissolve into 18.4ml deionized water; after AgNO₃ dissolved thoroughly, weigh accurately about 42.0mg sodium citrate dissolve into silver nitrate acid aqueous solution by magnetic stirring; weigh accurately about 5.7mg sodium borohydride to dissolve into 10.0ml deionized water, get 10.0ml sodium borohydride solution with concentration of 1.5×10⁻²mol/L; with magnetic stirring, introducing 1.6ml 1.5×10⁻²mol/L sodium borohydride solution into the silver nitrate aqueous solution, reaction for 10 minutes to get 20.0ml Ag nano-particle sol with concentration of 1×10⁻³mol/L; measuring and taking 1.2ml Ag nano-particle sol with concentration of 1×10⁻³mol/L into a beaker, adding 10ml PVP solution with concentration of 0.01g/ml, magnetic stirring for 12 hours, finally get Ag nano-particle after surface treatment.

Preparation of Zn_{1.96}SiO₄: Mn_{0.04}@SiO₂@ Ag_{2.5×10}⁻⁴: By stirring, adding 30.0ml absolute ethanol, 7.2ml aqueous ammonia, and 1.2ml TEOS one after another into the Ag nano-particle sol, and reaction for 6 hours, then adjusting the pH value of the solution with 3.0 to 3.5; introducing 9.8ml Zn(NO₃)₂ with concentration of 1.0mol/L, 4.0ml Mn(CH₃COO)₂ with concentration of 0.05mol/L, stirring, and dropping 40.0ml ammonium oxalate solution with concentration of 0.4mol/L, then generated white precipitate; then stirring for 3 hours, ageing, filtering, and washing the precipitate by deionized water and absolute alcohol for three times, drying and obtain a premonitory; putting the premonitory into the muffle for heat treatment 4 hours under temperature of 1250°C, then transfer into a tube furnace roasting for 2 hours under temperature of 1200°C in 95%N₂+5%H₂ mixed reducing atmosphere; cooling to room temperature, finally obtain the luminescent material Zn_{1.96}SiO₄: Mn_{0.04}@SiO₂@ Ag_{2.5×10}⁻⁴.

Figure 1 illustrates a comparison CL emission spectrum of the luminescent materials at the condition of the accelerate voltage is 1.5kv, one is the spectrum of luminescent material Zn_{1.96}SiO₄:Mn_{0.04}@ Ag_{2.5×10}⁻⁴, another is the spectrum of commercial obtained luminescent material Zn₂SiO₄:Mn. According to figure 1, around emission peak of wavelength 525nm, the luminous intensity of the metal coated nano-particle is 45% higher than the commercial obtained material, the luminescent material of the present example has the characteristics of good stability, good color purity, and higher luminous efficiency.

### Example 4, Preparation of Zn_{1.94}SiO₄: Mn_{0.06}@SiO₂@ Pd_{1×10}⁻⁵ by Precipitation Coating Method

Preparation of Pd nano-particle sol: Weigh accurately about 0.22mg PdCl₂·2H₂O and dissolve into 19.0ml deionized water; after palladium chloride dissolved thoroughly, weigh accurately about 11.0mg sodium citrate, 4.0mg sodium lauryl sulfate, and dissolve into the palladium chloride aqueous solution by magnetic stirring; weigh accurately about 3.8mg sodium borohydride dissolve into 10.0ml deionized water to get a sodium borohydride reducing solution with concentration of 1×10⁻²mol/L; with magnetic stirring, fast introducing 1ml 1×10⁻²mol/L sodium borohydride solution into the palladium chloride aqueous solution, reaction for 20 minutes, and get 20.0ml Pd nano-particle sol with concentration of 5×10⁻⁵mol/L; measuring and taking 1.5ml Pd nano-particle sol with concentration of 5×10⁻⁵mol/L into a beaker, adding 8ml PVP solution with concentration of 0.005g/ml, magnetic stirring for 6 hours, finally get Pd nano-particle after surface treatment.

Preparation of Zn_{1.94}SiO₄: Mn_{0.06}@SiO₂@ Pd_{1×10}⁻⁵ By stirring, adding 40.0ml absolute ethanol, 8.0ml aqueous ammonia, and 1.8ml TEOS one after another into the Pd nano-particle sol, and reaction for 5 hours, then adjusting the pH value of the solution with 3.0 to 3.5; introducing 9.7ml ZnSO₄ with concentration of 1.0mol/L, 6.0ml MnSO₄ with concentration of 0.05mol/L, stirring, and dropping 12.0ml ammonium oxalate solution with concentration of 1.0mol/L, then generated white precipitate; then stirring for 3 hours, ageing, filtering, and washing the precipitate by deionized water and absolute alcohol for three times, drying and obtain a premonitory; putting the premonitory into the muffle for heat treatment 4 hours under temperature of 1300°C, then transfer into a tube furnace roasting for 1 hour under temperature of 1300°C in H₂ reducing atmosphere; cooling to room temperature, finally obtain the luminescent material Zn_{1.95}SiO₄: Mn_{0.05}@SiO₂@ Pd_{1×10}⁻⁵.

### Example 5, Preparation of Zn_{1.80}SiO₄: Mn_{0.20}@SiO₂@Ci_{1×10}⁻⁴ by Precipitation Coating Method

Preparation of Cu nano-particle sol: Weigh accurately about 1.6mg Cu(NO₃)₂ and dissolve into 16ml ethyl alcohol; after copper nitrate dissolved thoroughly, introducing 12.0ml PVP under stirring, then slowly dropping into 4.0ml sodium borohydride solution with concentration of 1×10⁻³mol/L; the sodium borohydride solution is acquired by dissolving 0.4mg sodium borohydride into 10.0ml deionized water; continue stirring for 10 minutes, and get 20.0ml Cu nano-particle sol with concentration of 4×10⁻⁴mol/L; measuring and taking 1.5ml Cu nano-particle sol with concentration of 4×10⁻⁴mol/L into a beaker, adding 5.0ml PVP solution with concentration of 0.03g/ml, magnetic stirring for 10 hours, finally get Cu nano-particle after surface treatment.

Preparation of Zn_{1.80}SiO₄: Mn_{0.20}@SiO₂@Cu_{1×10}⁻⁴: By stirring, adding 15.0ml absolute ethanol, 3.0ml aqueous ammonia, and 1.4ml TEOS one after another into the Cu nano-particle sol, and reaction for 4 hours, then adjusting the pH value of the solution with 3.0 to 3.5; introducing 18.0ml Zn(NO₃)₂ with concentration of 0.5mol/L, 5.0ml Mn(NO₃)₂ with concentration of 0.2mol/L, stirring, and dropping 40.0ml ammonium oxalate solution with concentration of 0.4mol/L, then generated white precipitate; then stirring for 2.5 hours, ageing, filtering, and washing the precipitate by deionized water and absolute alcohol for three times, drying and obtain a premonitory; putting the premonitory into the muffle for heat treatment 5 hours under temperature of 1100°C, then transfer into a tube furnace roasting for 4 hours under temperature of 1000°C in 95%N₂+5%H₂ mixed reducing atmosphere; cooling to room temperature, finally obtain the luminescent material Zn_{1.80}SiO₄: Mn_{0.20}@SiO₂@Cu_{1×10}⁻⁴.

### Example 6, Preparation of Zn_{1.90}SiO₄: Mn_{0.1}@SiO₂@ Ag_{5×10}⁻⁴ by Precipitation Coating Method

Preparation of Ag nano-particle sol: Weigh accurately about 0.0429g AgNO₃, 0.0733g sodium citrate, and 0.05g PVP and dissolve into deionized water separately to get 10.0ml 0.025mol/L AgNO₃ aqueous solution, 10.0ml 0.025mol/L sodium citrate aqueous solution, 10.0ml 5.0mg/ml PVP aqueous solution; taking 2.0ml AgNO₃ aqueous solution and adding into 30.0ml deionized water, and dropping into 4.0ml PVP aqueous solution, stirring and heating to temperature of 100°C; introducing 4.0ml sodium citrate aqueous solution, after reaction 15 minutes, get 40.0ml Ag nano-particle sol with concentration of 1×10⁻³mol/L; measuring and taking 5.0ml Ag nano-particle sol with concentration of 1×10⁻³mol/L into a beaker, adding 6ml PVP solution with concentration of 0.06g/ml, magnetic stirring for 15 hours, finally get Ag nano-particle after surface treatment.

Preparation of Zn_{1.90}SiO₄: Mn_{0.1}@SiO₂@Ag_{5×10}⁻⁴: By stirring, adding 35.0ml absolute ethanol, 8.0ml aqueous ammonia, and 1.5ml TEOS one after another into the Ag nano-particle sol, and reaction for 2 hours, then adjusting the pH value of the solution with 3.0 to 3.5; introducing 9.5ml Zn(CH₃COO)₂ with concentration of 2.0mol/L, 5.0ml Mn(CH₃COO)₂ with concentration of 0.1mol/L, stirring, and dropping 30.0ml ammonium oxalate solution with concentration of 0.5mol/L, then generated white precipitate; then stirring for 4 hours, ageing, filtering, and washing the precipitate by deionized water and absolute alcohol for three times, drying and obtain a premonitory; putting the premonitory into the muffle for heat treatment 2 hours under temperature of 1300°C, then transfer into a tube furnace roasting for 3 hours under temperature of 1200°C in 95%N₂+5%H₂ mixed reducing atmosphere; cooling to room temperature, finally obtain the luminescent material Zn_{1.90}SiO₄: Mn_{0.1}@SiO₂@ Ag_{5×10}⁻⁴.

### Example 7, Preparation of Zn_{1.85}SiO₄: Mn_{0.15}@SiO₂@ (Ag_{0.5}/Au_{0.5}) ₁._{25×10}⁻³ by Precipitation Coating Method

Preparation of Ag_{0.5}/Au_{0.5} nano-particle sol: Weigh accurately about 6.2mg AuCl₃·HCl·4H₂O, 2.5mg AgNO₃ to dissolve into 28.0ml deionized water; after dissolved thoroughly, weigh accurately about 22.0mg sodium citrate and 20.0mg PVP dissolve into the mixed solution by magnetic stirring; weigh accurately about 5.7mg sodium borohydride to dissolve into 10.0ml deionized water, get 10.0ml sodium borohydride solution with concentration of 1.5×10⁻²mol/L; with magnetic stirring, introducing 2.0ml 1.5×10⁻²mol/L sodium borohydride solution into the mixed solution, reaction for 20 minutes to get 30.0ml Ag/Au nano-particle sol with total metal concentration of 1×10⁻³mol/L; measuring and taking 5.0ml Ag_{0.5}/Au_{0.5} nano-particle sol with concentration of 1×10⁻³mol/L into a beaker, adding 10.0ml PVP solution with concentration of 0.1g/ml, magnetic stirring for 12 hours, finally get Ag_{0.5}/Au_{0.5} nano-particle after surface treatment.

Preparation of Zn_{1.85}SiO₄: Mn_{0.15}@SiO₂@(Ag_{0.5}/Au_{0.5})_{1.25×10}⁻³: By stirring, adding 30.0ml absolute ethanol, 6.0ml aqueous ammonia, and 1.0ml TEOS one after another into the Ag nano-particle sol, and reaction for 5 hours, then adjusting the pH value of the solution with 3.0 to 3.5; introducing 7.4ml Zn(CH₃COO)₂ with concentration of 1.0mol/L, 6.0ml Mn(CH₃COO)₂ with concentration of 0.1mol/L, stirring, and dropping 20.0ml ammonium oxalate solution with concentration of 0.5mol/L, then generated white precipitate; then stirring for 3 hours, ageing, filtering, and washing the precipitate by deionized water and absolute alcohol for three times, drying and obtain a premonitory; putting the premonitory into the muffle for heat treatment 4 hours under temperature of 1250°C, then transfer into a tube furnace roasting for 3 hours under temperature of 1250°C in 95%N₂+5%H₂ mixed reducing atmosphere; cooling to room temperature, finally obtain the luminescent material Zn_{1.85}SiO₄:Mn_{0.15}@SiO₂@(Ag_{0.5}/Au_{0.5})_{1.25×10}⁻³.

The above-mentioned silicate luminescent material, by coating metal particle to form a core-shell structure, improves inner quantum efficiency of the silicate, and by adding metal nano-particles, strengthens luminous intensity of the silicate; furthermore, the luminescent material has good stability, has spherical morphology, and the size and morphology can be controlled; as spherical morphology has higher bulk density, it is facilitate in coating and improves the display effect.

At the same time, by using the aforesaid precipitation method, it can get epigranular, core-shell structured, spherical morphology of luminescent material; and by this method, it reduces reaction temperature, simplifies preparation technology, decreases equipment requirements, and no pollution, easy to control.

## Claims

1. A silicate luminous material which is represented by the following chemical formula: Zn₂₋ₓSiO₄:Mnₓ@SiO₂@M_{y}, wherein @ is coating, M is inner core, SiO₂ is middle shell, Zn₂₋ₓSiO₄:Mnₓ is outer shell; M is a metal selected at least one from the group consisting of Ag, Au, Pt, Pd and Cu; y is molar ratio of M to Si in the silicate luminous material; and, the scope of x is: 0<x≤0.2, the scope of y is 0<y≤1×10⁻².

2. The silicate luminous material according to claim 1, wherein the scope of x is 0.02≤x≤0.10, the scope of y is 1×10⁻⁵≤y≤5×10⁻³.

3. A preparation method of a silicate luminous material, comprising the steps of:
A. mixing a salt solution containing M, an addition agent solution for stabilizing and dispersing, and a reducing agent solution, reacting to obtain a collosol containing M nano-particle; and M is a metal selected at least one from the group consisting of Ag, Au, Pt, Pd and Cu;
B. adding the collosol containing M nano-particle into PVP aqueous solution for M nano-particle surface treating, then coating SiO₂ nanosphere by StÖber method, to obtain a SiO₂@M sol suspension;
C. introducing a Zn salt solution and a Mn salt solution into the SiO₂@M sol suspension, the amount of Zn and Mn element is accorded to stoichiometric ratio of chemical formula Zn₂₋ₓSiO₄:Mnₓ@SiO₂@M_{y}, and the scope of x is 0.02≤x≤0.10, the scope of y is 1×10⁻⁵≤y≤5×10⁻³; and, adding a precipitating agent into the suspension, then filtering, washing and drying the generated precipitate, to obtain a precursor; drying the precursor for 2 to 10 hours, and heat treatment in reducing atmosphere, then cooling to obtain the silicate luminous material Zn₂₋ₓSiO₄:Mnₓ@SiO₂@M_{y}; wherein @ is coating, M is inner core, SiO₂ is middle shell, Zn₂₋ₓSiO₄:Mnₓ is outer shell.

4. The preparation method according to claim 3, wherein step A further includs the step of preparing the salt solution containing M:
providing raw material of M-salt, adding into deionized water or ethanol, then stirring to obtain the salt solution containing M with concentration from 1×10⁻³mol/L to 5×10⁻³mol/L; the raw material of M-salt is selected at least one from the group consisting of AgNO₃, AuCl₃·HCl·4H₂O, H₂PtCl₆·6H₂O, PdCl₂·2H₂O; and Cu(NO₃)₂.

5. The preparation method according to claim 3, wherein in step A, the addition agent is selected at least one from the group consisting of PVP, sodium citrate, cetyltrimethyl ammonium bromide, sodium dodecyl sulfate, and sodium dodecyl sulfonate; and the content of addition agent in the collosol containing M nano-particle is from 1×10⁻⁴g/ml to 5×10⁻²g/ml; and, the concentration of the reducing agent solution is from 1×10⁻⁴mol/L to 1.0mol/L, the reducing agent is selected at least one from the group consisting of hydrazine hydrate, ascorbic acid, sodium citrate, and sodium borohydride; and the molar ratio of reducing agent to M is from 3.6:1 to 18:1.

6. The preparation method according to claim 3, wherein in step B, the concentration of the PVP aqueous solution is from 0.005g/ml to 0.1g/ml;
further in step B, the processing of coating SiO₂ nanosphere by StÖber method including: adding absolute ethanol, deionized water, aqueous ammonia, and TEOS one after another into the collosol containing M nano-particle, stirring to obtain the SiO₂@M sol suspension.

7. The preparation method according to claim 3, wherein in step C, prior to introducing a Zn salt solution and a Mn salt solution into the SiO₂@M sol suspension, pH value of the SiO₂@M sol suspension is adjusted to 3.0 to 3.5.

8. The preparation method according to claim 3, wherein in step C, the Zn salt solution is selected from the group of Zn solution consisting of nitrate, acetate, sulfate, and hydrochloride; the Mn salt is selected from the group of Mn solution consisting of nitrate, acetate, sulfate, and hydrochloride;
the stoichiometric ratio of Zn and Mn to Si is (Zn+Mn): Si ≤ 1 : 2; the precipitating agent is ammonium oxalate, the amount of ammonium oxalate is 125% to the total moles of Zn₂₋ₓSiO₄:Mnₓ@SiO₂@M_{y} suspension.

9. The preparation method according to claim 3, wherein in step S3, the heat treatment is under temperature around 1000°C to 1300°C, and treating for 1 to 6 hours.

10. The preparation method according to claim 3, wherein the reducing atmosphere is selected from the group consisting of N₂ and H₂ mixed reduction atmosphere, CO reduction atmosphere, and H₂ reduction atmosphere.

## Patentansprüche

1. Silikatleuchtstoff repräsentiert durch folgende chemische Formel:
Zn₂₋ₓSiO₄:Mnₓ@SiO₂@M_{y}, wobei @ eine Beschichtung, M den inneren Kern, SiO₂ die mittlere und Zn₂₋ₓSiO₄:Mnₓ die äußere Hülle darstellt; M ist ein Metall ausgewählt aus wenigstens einem der Gruppe bestehend aus Ag, Au, Pt, Pd und Cu; y steht für das molare Verhältnis von M zu Si im Silikatleuchtstoff; und der Bereich für x ist 0 < x ≤ 0,2, der Bereich für y ist 0 < y ≤ 1x10⁻².

2. Der Silikatleuchstoff nach Anspruch 1, wobei der Bereich für x 0,02 < x ≤ 0,10 beträgt, der Bereich für y ist 1x10⁻⁵ ≤ y ≤ 5x10⁻³.

3. Ein Verfahren zur Herstellung eines Silikatleuchtstoffs, aufweisend die Schritte:
A. Mischen einer Salzlösung aufweisend M, einer Lösung eines Zusatzmittels zur Stabilisierung und Dispergierung, und der Lösung eines Reduktionsmittels, Ausreagieren um ein kolloidale Lösung enthaltend M Nanopartikel zu erhalten; und M ist ein Metall ausgewählt aus wenigstens einem der Gruppe bestehend aus Ag, Au, Pt, Pd und Cu;
B. Oberflächenbehandlung der Nanopartikel durch Hinzufügen der kolloidalen Lösung enthaltend M Nanopartikel zu einer wässrigen PVP-Lösung, anschließend Beschichten der SiO₂ Nanosphären nach der Stöber-Methode um eine SiO₂@M Sol-Suspension zu erhalten;
C. Hinzufügen einer Zn-Salzlösung und einer Mn-Salzlösung zu der SiO₂@M Sol-Suspension, die Menge der Zn und Mn Elemente ergibt sich auf Basis des stöchiometrischen Verhältnisses nach der chemischen Formel Zn₂₋ₓSiO₄:Mnₓ@SiO₂®M_{y}, und der Bereich für x ist 0,02 ≤ x ≤ 0,10, der Bereich für y ist 1x10⁻⁵ ≤ y ≤ 5x10⁻³; und, Hinzufügen eines Ausfällmittels zum Ausfällen zur Suspension, anschließendem Filtern, Waschen und Trocknen des hergestellten Präzipitats um eine Vorstufe zu erhalten, Trocknen der Vorstufe für 2 bis 10 Stunden, und Hitzebehandlung in einer reduzierenden Atmosphäre, anschließendem Abkühlen um den Silikatleuchtstoff Zn₂₋ₓSiO₄:Mnₓ@SiO₂@M_{y} zu erhalten, wobei @ eine Beschichtung, M den inneren Kern, SiO₂ die mittlere und Zn₂₋ₓSiO₄:Mnₓ die äußere Hülle darstellt.

4. Das Verfahren nach Anspruch 3,wobei der Schritt A des Weiteren die Verfahrensschritte zur Herstellung der Salzlösung enthaltend M aufweist
Bereitstellen des Rohmaterials des M-Salzes, Hinzufügen zu entionisiertem Wasser oder Ethanol, anschließendes Rühren um eine Salzlösung aufweisend M in einer Konzentration von 1x10⁻³ mol/L bis zu 5x10⁻³ mol/L zu erhalten; das Rohmaterial des M-Salzes ist ausgewählt aus wenigstens einem der Gruppe bestehend aus AgNO₃, AuCl₃ HCl 4H₂O, H₂PtCl₆ 6H₂O, PdCl₂ 2H₂O, und Cu(NO₃)₂.

5. Das Verfahren nach Anspruch 3, wobei im Schritt A das hinzugefügte Mittel wenigstens eines ausgewählt aus der Gruppe bestehend aus PVP, Natriumcitrat Cetyltrimethylammoniumbromid, Natrium Dodecylsulfat; und Natrium Dedecylsulfonat ist; und die Menge an hinzugefügtem Mittel in der kolloidalen Lösung enthaltend die M Nanopartikel von 1x10⁻⁴ g/ml bis zu 5x10⁻² g/ml; und die Konzentration der Reduktionsmittel-Lösung von 1x10⁻⁴ mol/L bis zu 1,0 mol/L beträgt, das Reduktionsmittel ist wenigstens eines ausgesucht aus der Gruppe bestehend aus Hydrazin Hydrat, Ascorbinsäure, Natriumcitrat und Natrium Borhydrid; und das molare Verhältnis zwischen dem Reduktionsmittel und M beträgt von 3,6:1 bis zu 18:1.

6. Das Verfahren nach Anspruch 3, wobei im Schritt B die Konzentration der wässrigen PVP-Lösung von 0,005 g/ml bis zu 0,1 g/ml beträgt;
des Weiteren im Schritt B, das Verfahren zur Beschichtung der SiO₂ Nanosphären nach dem Stöber-Verfahren beinhaltet: Sukzessives hinzufügen absoluten Methanols, entionisiertem Wassers, wässriger Ammoniumlösung, und TEOS eines nach dem anderen zur kolloidalen Lösung enthaltend die M Nanopartikel, rühren um die SiO₂ Sol-Suspension zu erhalten.

7. Das Verfahren nach Anspruch 3, wobei im Schritt C vor dem Hinzufügen einer Zn-Salzlösung und einer Mn-Salzlösung zur SiO₂@M Sol-Suspension der pH-Wert der SiO₂@M Sol-Suspension auf 3,0 bis zu 3,5 eingestellt wird.

8. Das Verfahren nach Anspruch 3, wobei im Schritt C die Zn-Salzlösung aus wenigstens einer der Gruppe der Zn-Salzlösungen bestehend aus Nitrat, Acetat, Sulfat und Hydrochlorid ausgewählt ist; das Mn-Salz ausgewählt ist aus der Gruppe der Mn-Lösungen bestehend aus Nitrat, Acetat, Sulfat und Hydrochlorid; das stöchiometrische Verhältnis des Zn und M zu Si (Zn+Mn):Si ≤ 1:2 beträgt; das Mittel zum Ausfällen Ammoniumoxalat ist, die Menge an Ammoniumoxalat 125% der gesamtem Molmenge an Zn₂₋ₓSiO₄:Mnₓ@SiO₂@M_{y} Suspension beträgt.

9. Das Verfahren nach Anspruch 3, wobei im Schritt S3 die Hitzebehandlung bei einer Temperatur um 1000°C bis zu 1300°C durchgeführt wird, und die Behandlung 1 bis 6 Stunden dauert.

10. Das Verfahren nach Anspruch 3, wobei die reduzierende Atmosphäre ausgesucht ist aus der Gruppe bestehend aus einer gemischten N₂ und H₂ reduzierenden Atmosphäre, CO reduzierenden Atmosphäre und H₂ reduzierenden Atmosphäre.

## Revendications

1. Matériau lumineux de silicate qui est représenté par la formule chimique suivante : Zn₂₋ₓSiO₄ : Mnₓ@SiO₂@M_{y}, dans lequel @ est un revêtement, M est un noyau interne, SiO₂ est une coque médiane, Zn₂₋ₓSiO₄:Mnₓ est une coque extérieure ; M est au moins un métal choisi parmi le groupe constitué de Ag, Au, Pt, Pd et Cu ; y est le rapport molaire de M à Si dans le matériau lumineux de silicate; et, la portée de x est : 0<x≤0,2, la portée de y est 0<y≤ 1x10⁻².

2. Matériau lumineux de silicate selon la revendication 1, dans lequel la portée de x est 0,02≤x≤0,10, la portée de y est 1×10⁻⁵≤y≤5×10⁻³.

3. Procédé de préparation d'un matériau lumineux de silicate, comprenant les étapes de :
A. mélange d'une solution de sel contenant M, d'une solution d'agent d'addition pour la stabilisation et la dispersion, et d'une solution d'agent réducteur, réaction pour obtenir un collosol contenant des nano-particules de M ; et M est au moins un métal choisi parmi le groupe constitué de Ag, Au, Pt, Pd et Cu ;
B. ajout du collosol contenant les nano-particules de M dans une solution aqueuse de PVP pour le traitement de surface des nano-particules de M, puis revêtement de nanosphères de SiO₂ par un procédé Stöber, pour obtenir une suspension en solution de SiO₂@M ;
C. introduction d'une solution de sel de Zn et d'une solution de sel de Mn dans la suspension en solution de SiO₂@M, la quantité des éléments Zn et Mn étant conforme à un rapport stoechiométrique de la formule chimique Zn₂₋ₓSiO₄:Mnₓ@SiO₂@M_{y}, et la portée de x est 0,02≤x≤0,10, la portée de y est 1×10⁻⁵≤y≤5×10⁻³ ; et, ajout d'un agent de précipitation dans la suspension, puis filtration, lavage et séchage du précipité généré, pour obtenir un précurseur : séchage du précurseur de 2 à 10 heures, et traitement thermique en atmosphère réductrice, puis refroidissement pour obtenir le matériau lumineux de silicate Zn₂₋ₓSiO₄:Mnₓ@SiO₂@M_{y} ; dans lequel @ est un revêtement, M est un noyau interne, SiO₂ est une coque médiane, Zn₂₋ₓSiO₄:Mnₓ est une coque extérieure.

4. Procédé de préparation selon la revendication 3, dans lequel l'étape A inclut en outre l'étape de préparation de la solution de sel contenant M :
la fourniture d'une matière première de sel de M, l'ajout dans de l'eau déionisée ou de l'éthanol, puis l'agitation pour obtenir la solution de sel contenant M avec une concentration de 1×10⁻³mol/L à 5×10⁻³mol/l ; la matière première de sel de M étant au moins une choisie parmi le groupe constitué de AgNO₃, AuCl₃•HCl•4H₂O, H₂PtCl₆•6H₂O, PdCl₂•2H₂O et Cu(NO₃)₂.

5. Procédé de préparation selon la revendication 3, dans lequel dans l'étape A, l'agent d'addition est au moins un choisi parmi le groupe constitué de PVP, de citrate de sodium, de bromure de cétyltriméthylammonium, de dodécylsulfate de sodium, et de dodécyl-sulfonate de sodium ; et la teneur en agent d'addition dans le collosol contenant les nano-particules de M est de 1×10⁻⁴g/ml à 5×10⁻² g/ml ; et, la concentration de la solution d'agent réducteur est de 1×10⁻⁴mol/l à 1,0mol/l, l'agent réducteur est au moins un choisi parmi le groupe constitué d'hydrate d'hydrazine, d'acide ascorbique, de citrate de sodium, et de borohydrure de sodium ; et le rapport molaire de l'agent réducteur à M est de 3,6:1 à 18:1.

6. Procédé de préparation selon la revendication 3, dans lequel dans l'étape B, la concentration de la solution aqueuse de PVP est de 0,005g/ml à 0,1g/ml ;
en outre dans l'étape B, le traitement de revêtement de nanosphères de SiO₂ par le procédé Stöber comprenant ;
l'addition d'éthanol absolu, d'eau déionisée, d'ammoniaque, et de TEOS les uns après les autres dans le collosol contenant les nano-particules de M, en agitant pour obtenir la suspension en solution de SiO₂@M.

7. Procédé de préparation selon la revendication 3, dans lequel dans l'étape C, avant l'introduction d'une solution de sel de Zn et d'une solution de sel de Mn dans la suspension en solution de SiO₂@M, la valeur du pH de la suspension en solution de SiO₂@M est ajustée à 3,0 à 3,5.

8. Procédé de préparation selon la revendication 3, dans lequel dans l'étape C, la solution de sel de Zn est choisie dans le groupe de solutions de Zn constituées de nitrate, d'acétate, de sulfate et de chlorhydrate; le sel de Mn est choisi dans le groupe de solutions de Mn constituées de nitrate, d'acétate, de sulfate et de chlorhydrate ;
le rapport stoechiométrique du Zn et Mn à Si est de (Zn+Mn) : Si≤1:2 ; l'agent de précipitation est l'oxalate d'ammonium, la quantité d'oxalate d'ammonium est de 125% des moles totales de la suspension de Zn₂₋ₓSiO₄:Mnₓ@SiO₂@M_{y}.

9. Procédé de préparation selon la revendication 3, dans lequel dans l'étape S3, le traitement thermique est à une température d'environ 1000°C à 1300°C, et le traitement dure de 1 à 6 heures.

10. Procédé de préparation selon la revendication 3, dans lequel l'atmosphère réductrice est choisie dans le groupe constitué d'une atmosphère réductrice mixte de N₂ et H₂, d'une atmosphère réductrice de CO et d'une atmosphère réductrice de H₂.
